Europäisches Patentamt

European Patent Office

Office européen des brevets

(19)

(11) Veröffentlichungsnummer: **0 589 890 B1**

## (12) EUROPÄISCHE PATENTSCHRIFT

(45) Veröffentlichungstag der Patentschrift: **20.12.95**

(51) Int. Cl.⁶: **A23L 2/00**

(21) Anmeldenummer: **92907320.3**

(22) Anmeldetag: **09.04.92**

(86) Internationale Anmeldenummer:
**PCT/CH92/00066**

(87) Internationale Veröffentlichungsnummer:
**WO 93/20721 (28.10.93 93/26)**

---

(54) **VERFAHREN ZUR QUALITÄTSOPTIMIERUNG BEIM ENTFERNEN VON ZUCKER AUS GETRÄNKEN UND ANLAGE ZUR DURCHFÜHRUNG DES VERFAHRENS**

---

(43) Veröffentlichungstag der Anmeldung:
**06.04.94 Patentblatt 94/14**

(45) Bekanntmachung des Hinweises auf die Patenterteilung:
**20.12.95 Patentblatt 95/51**

(84) Benannte Vertragsstaaten:
**AT CH DE LI**

(56) Entgegenhaltungen:
**WO-A-82/02405**
**WO-A-89/10703**
**WO-A-90/14018**
**WO-A-91/14497**
**GB-A- 2 125 268**

(73) Patentinhaber: **BUCHER-GUYER AG Maschinenfabrik**

**CH-8166 Niederweningen/Zürich (CH)**

(72) Erfinder: **GRESCH, Walter**
**Boletstrasse 390**
**CH-8166 Niederweningen (CH)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 589 890 B1

## Beschreibung

Die Erfindung betrifft ein Verfahren zur Qualitätsoptimierung beim Entfernen von nichtflüchtigen Stoffen wie Zucker und/oder Säure und/oder Fehlgeschmack verursachenden Stoffen aus nichtalkoholischen oder alkoholischen Getränken oder zuckerhaltigen Lösungen mittels Membrantrennverfahren.

Verfahren zum Entfernen von Stoffen aus Flüssigkeiten durch Membrantrennverfahren sind bekannt. So offenbart WO 91/14497 (Bucher-Guyer) eine Membran-Trenneinrichtung zum Entfernen von flüchtigen Stoffen, die nach dem Prinzip der Umkehrosmose arbeitet. In dieser Einrichtung werden flüchtige Stoffe als Permeat von der Ausgangsflüssigkeit abgetrennt. Im Permeatkreislauf der Einrichtung ist eine weitere Membran-Trenneinrichtung in Form einer Pervaporationseinrichtung angeordnet, durch welche flüchtige Stoffe ausgeschieden werden, während die nichtflüchtigen Stoffe, z.B. Geschmacksstoffe, im Permeatkreislauf bleiben und zur Permeatseite der Membran-Trenneinrichtung zurückgeführt werden.

Durch die WO89/10703 ist ein Verfahren zur Entzuckerung von alkoholfreien Getränken bekannt. Dabei erfolgt die Abtrennung des Zuckers aus dem Rohsaft mit Hilfe bekannter Membrantrennverfahren wie Umkehrosmose oder Dialyse. Die im Retentatkreislauf der Membrananlage enthaltene und zu entfernende Uebergangskomponente, z.B. Zucker, diffundiert im Falle von Dialyse durch die Membrane hindurch in den Permeatkreislauf der Membrananlage. Das Raffinat, z.B. entzuckerter Fruchtsaft, wird aus dem Retentatkreislauf der Membrananlage abgeführt.

Je nach Art der verwendeten Membrananlage für die Abtrennung der Uebergangskomponenten, z.B. Zucker, ist es bei diesem bekannten Verfahren möglich, dass die Uebergangskomponente, die aus der Ausgangsflüssigkeit zu entfernen ist, praktisch ohne Mittransport des Lösungsmittels, z.B. Wasser bei Fruchtsäften, von der Retentatseite auf die Permeatseite der Membrane übergeht. Andererseits können auch je nach Betriebszustand Komponenten, insbesondere Wasser wegen der höheren Konzentration auf der Permeatseite, von der Permeatseite auf die Retentatseite hinüberdiffundieren. Aufgrunddessen ist eine Verdünnung des Retentates möglich, was zu einer nur scheinbaren Reduktion des zu entfernenden Stoffes im Retentat und dadurch zur Qualitätsminderung des Produktes führt. Die im Retentat zurückhaltenden Stoffe werden nämlich dadurch ebenfalls mitverdünnt. Dies gilt besonders für Dialyse-Anlagen. Betreibt man die Dialyse-Anlage aber mit einem leichten, entsprechenden Druck auf der Retentatseite, so ist es möglich, die Rückdiffusionsströmung von Wasser durch eine druckgetriebene Strömung von Wasser von der Retentatseite zur Permeatseite zu kompensieren. Ohne entsprechende, ständige Betriebsanalysen, die sehr aufwendig sind, ist es aber schwierig, die erwähnte Verdünnungswirkung durch die druckgetriebene Strömung ständig so zu kompensieren, dass eine optimale Endprodukt-Qualität von Betriebsbeginn bis Betriebsende aufrechterhalten wird.

Der Erfindung liegt die Aufgabe zugrunde, die genannten Nachteile zu vermeiden und die Qualität des Endproduktes zu verbessern.

Gemäss der Erfindung wird dies dadurch erreicht, dass der Membrandruck der Membrananlage zur Durchführung des Membrantrennverfahrens in Abhängigkeit von der Diffusion bzw. Rückdiffusion des Transportmittels für den zu entfernenden Stoff steuer- oder regelbar ist.

Ein wesentliches Merkmal der Erfindung besteht darin, dass die Durchflussmengen, vorzugsweise vor und nach der Membrananlage, erfasst werden, der Differenzwert der Durchflussmengen mit einem für die Qualität des Produktes optimalen Wert verglichen und die gegebenenfalls erhaltene Abweichung als Führungsgrösse zur Steuerung oder Regelung des Druckes im Retentatkreislauf der Membrananlage verwendet wird.

Vorzugsweise werden die Durchflussmengen vor und nach der Membrananlage erfasst.

Die Durchflussmengen können aber auch auf der Permeatseite der Membrananlage im Bereich der Zufuhr eines Waschsaftes und der Wegführung von mit nichtlüchtigen Stoffen angereicherter Flüssigkeit erfasst werden.

Eine optimale Qualität des Produkts wird erreicht, wenn der Differenzwert der Durchflussmengen bei ca. $0 \pm 25 \%$ liegt.

Zur Erfassung der Durchflussmengen ist in der Zuführleitung zur Membrananlage in einer auf der Permeatseite angeordneten Zuführleitung für Waschsaft, und in der Abflussleitung des Retentatkreislaufes oder in der auf der Permeatseite angeordneten Leitung zur Wegführung von mit nichtflüchtigen Stoffen angereicherter Flüssigkeite jeweils ein Durchflussmessgerät angeordnet, die über Messleitungen mit einem bspw. aus einem Regelgerät bestehenden Qualitäts-Optimalisator zur Steuerung bzw. Regelung des Druckes im Retentatkreislauf verbunden sind.

Nach einem weiteren Merkmal der Erfindung wird der Membrandruck bzw. Retentat-Druck durch Veränderung des Systemdruckes angepasst.

Zur Erzeugung und Veränderung des Retentat-Druckes ist der Retentatkreislauf der Membrananlage über ein Druckgefäss und ein Gaspolster mit einer Druckgestaltung und einem Druckregler verbunden.

Vorzugsweise erfolgt die Regelung des Retentat-Druckes automatisch dadurch, dass der vorzugsweise als Regler ausgeführte Qualitäts-Optimalisator über eine Steuerleitung mit dem Druckregler verbunden ist.

Die mit der Erfindung erzielten Vorteile bestehen darin, dass die Rückdiffusion des Wassers von der Permeatseite zur Retentatseite der Membrananlage ständig überwacht und durch Druckänderung im Retentatkreislauf kompensiert wird. Mit Hilfe von einfachen, physikalischen Bestimmungen und Messungen ist es möglich, die Membrananlage automatisch zu regeln und damit das Produkt von Betriebsbeginn bis Betriebsende auf einem gleichbleibenden hohen Qualitätsniveau zu halten.

Die Erfindung ist in der folgenden Beschreibung und der schematischen Zeichnung, die ein Ausführungsbeispiel einer Anlage zur Durchführung des Verfahrens darstellt, näher erläutert. Es zeigen

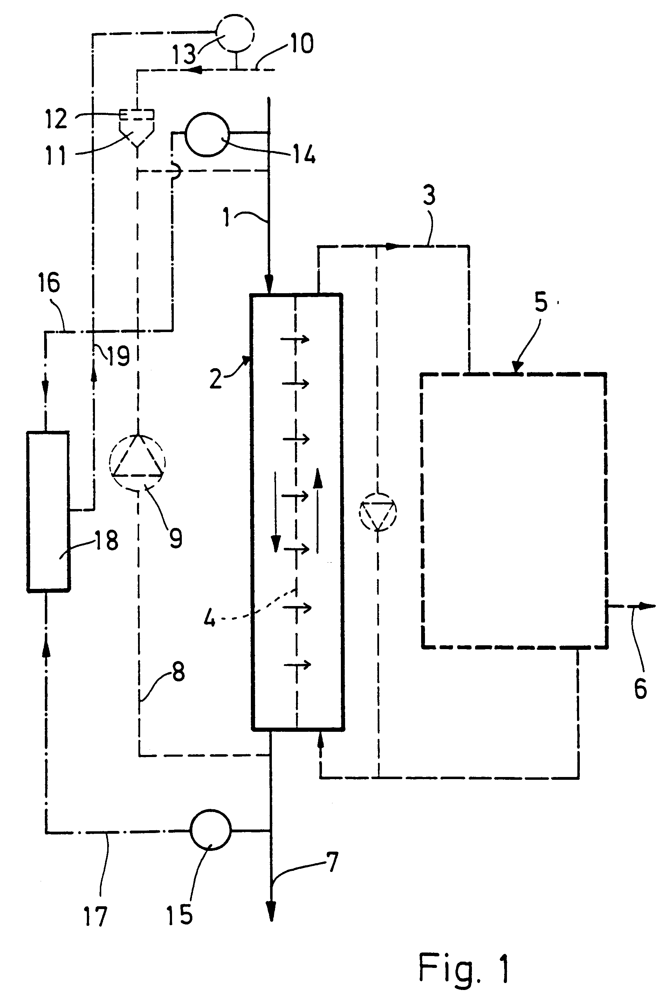

Fig. 1 eine schematische Darstellung einer Anlage zur Durchführung des Verfahrens mit retentatseitiger Durchflussmessung und

Fig. 2 die Anlage nach Fig. 1 mit permeatseitiger Durchflussmessung.

Die Ausgangsflüssigkeit bzw. der Rohsaft, dem der Zucker entzogen werden soll, wird über eine Leitung 1 einer Membrananlage 2 zugeführt. Die Membrananlage 2 besteht aus einer kombinierten Dialyse-Anlage, bei der das Permeat im Gegenstrom zum Retentat fliesst. Die Anlage ist mit einem Modul ausgerüstet, der einen Permeatkreislauf 3 im Gegenstrom zum Retentatstrom ermöglicht. Es ist jedoch auch die Verwendung einer Ultrafiltrationsanlage mit dem analogen Modul als Spezialmodul möglich. Der bevorzugte Trennbereich der Membrantrennanlage 2 liegt im Grenzbereich von niedermolekular und makromolekular, also im Grenzbereich zwischen Umkehrosmose und Ultrafiltration, deren maximale Trenngrenze 5000 Dalton beträgt. In diesem Bereich werden Farbstoffe noch zurückgehalten, während die Uebergangskomponenten, z.B. Zucker, durch die Membran 4 hindurchtreten und in den Permeatkreislauf 3 gelangen. Ferner passieren makromolekulare Stoffe, z.B. Extraktstoffe, Polyphenole etc. die Membran 4 der Membrananlage 2 in stark verringertem Masse. Daneben lassen sich aber auch z.B Dialyse-Anlagen mit üblicher Trenngrenze von ca. 10'000 Dalton einsetzen.

Im Permeatkreislauf 3 ist eine Einrichtung 5 zur selektiven Stoffentfernung angeordnet. Ueber eine Leitung 6 werden die zu entfernenden Stoffe, z.B. Zucker, als Extrakt abgeführt, z.B. in Form einer mit Zucker angereicherten Lösung, abgeführt. Das von dem unerwünschten Stoff befreite Getränk verlässt als Retentat bzw. Raffinat, z.B. zuckerreduzierter Fruchtsaft, über eine Leitung 7 die Membrananlage 2. Das Permeat wird nach der Stoffentfernung in der Einrichtung 5 zumindest teilweise wieder in den Prozess zurückgeführt.

Im Retentatkreislauf 8 der Membrananlage 2 ist zur Retentat-Umwälzung eine Pumpe 9 angeordnet. Ueber eine Druckgasleitung 10 und ein Druckgefäss 11, das ein Gaspolster 12 enthält, wird ein Druckgas, z.B. Stickstoff, CO oder Luft , in den Retentatkreislauf 8 eingeleitet. Der dadurch entstehende leichte Druck auf der Retentatseite bewirkt eine Permeation von Flüssigkeit von der Retentatseite auf die Permeatseite der Membrane, durch welche die für die Produktqualität nachteilige Rückdiffusion der Flüssigkeit (Wasser) von der Permeatseite auf die Retentatseite kompensiert wird. Der Druckgasleitung 10 ist ein Druckregler 13 zugeordnet, durch den der Druck im Retentatkreislauf 8 geregelt werden kann.

Für eine optimale Qualität des Endprodukts ist es wichtig, dass der Druck im Retentatkreislauf 8 wegen der möglichen Rückdiffusion des Wassers ständig überwacht und auf einen optimalen Wert eingestellt wird. Hierzu ist in der Zuführleitung 1 ein Durchflussmessgerät 14 angeordnet, das die Durchflussmenge $F_1$ vor der Membrananlage 2 erfasst. Zur Bestimmung der Durchflussmenge $F_2$ nach der Membrananlage 2 ist ein weiteres Durchflussmessgerät 15 in der Leitung 7 vorgesehen.

Die von den Durchflussmessgeräten 14 und 15 erhaltenen Durchflusswerte werden über Messleitungen 16 und 17 einem Qualitäts-Optimalisator 18 zugeführt, der bspw. aus einem Regelgerät bestehen kann. Im Qualitäts-Optimalisator 18 wird die Differenz $F_1 - F_2$ oder $F_2 - F_1$ der Durchflussmengen $F_1$ und $F_2$ ermittelt und mit einem für die Qualität des Endproduktes optimalen Wert verglichen.

Dieser Optimalwert Xopt liegt normalerweise in der Gegend von Null, d.h., die Durchflussmenge $F_1$ vor der Membrananlage sollte etwa gleich der Durchflussmenge $F_2$ nach der Membrananlage sein. Bei diesem Betriebspunkt besteht volumetrisch ungefähr ein Gleichgewicht zwischen den Komponenten, die vom Retentat zum Permeat wandern und den Komponenten, die vom Permeat zum Retentat wandern. Soweit es sich um reine Diffusion handelt, entstehen praktisch keine eigentlichen Volumenströme, sondern lediglich Veränderungen im spezifischen Gewicht. Bei der druckgetriebenen Strömung werden neben Wasser auch noch andere Komponenten permeieren. Aus diesem Grund und auch aus anderen Gründen liegt der für die optimale Qualität des Produkts erforderliche Optimalwert Xopt der Durchflussmengendifferenz in der Praxis leicht über oder unter dem Wert Null. In den meisten Fällen liegt der optimale Wert für die Durchflussmengendifferenz bei ca. Xopt = $0 \pm 25$ %.

Der im vorzugsweise reglergesteuerten Qualitäts-Optimalisator 18 durchgeführte Vergleich zwischen der tatsächlichen Durchflussmengendifferenz und dem vorgegebenen Optimalwert dient als Signal zur Bestimmung des Retentat-Druckes. Ist z.B der Optimalwert Xopt = 0 und die tatsächlich gemessene Durchflussmenge $F_1$ = $F_2$, so wird am Retentat-Druck keine Veränderung vorgenommen. Ist dagegen $F_2$ > $F_1$, dann deutet dies auf eine Rückdiffusion von Wasser von der Permeatseite auf die Retentatseite hin. Als Ausgleich hierfür muss dann durch Erhöhung des Retentat-Druckes die druckgetriebene Strömung vom Retentat ins Permeat vergrössert werden.

Die Anpassung des Membrandruckes bzw. des Druckes im Retentatkreislauf 8 wird vorzugsweise durch Veränderung des Systemdrucks vorgenommen. Dadurch wird eine hydraulische Veränderung der Strömung und eine entsprechende ungleichmässige Druckveränderung im Modul vermieden, die auch Veränderungen am Stoffaustausch mit sich ziehen würde und zu qualitativen Veränderung führt. Im Ausführungsbeispiel wird die Veränderung des Systemdruckes durch Druckänderungen im Gaspolster 12 des Druckgefässes 11 realisiert.

Vorzugsweise erfolgt die Qualitäts-Optimierung gemäss der Erfindung automatisch während des gesamten Prozessablaufes. Der im Qualitäts-Optimalisator 18 durchgeführte Vergleich zwischen |$F_1$ - $F_2$| und Xopt wird zu einem Regelsignal verarbeitet, das über eine Steuerleitung 19 auf den Druckregler 13 einwirkt und als Führungsgrösse dient. Dadurch wird der über die Druckgasleitung 10 auf das Gaspolser 12 des Druckgefässes 11 und damit auf den Retentatstrom ausgeübte Druck automatisch auf den vorgegebenen, optimalen Wert einreguliert.

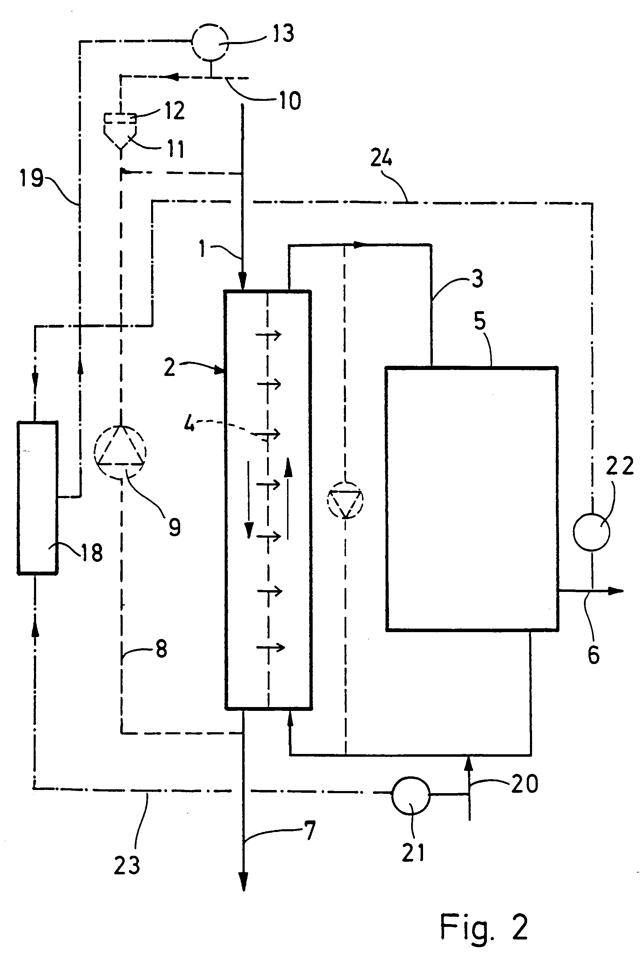

Ein weiteres Ausführungsbeispiel zur Erfassung der Durchflussmengen ist in Fig. 2 dargestellt. Anstelle der Durchflussmengenerfassung im Bereich der Zuführleitung 1 und der Abflussleitung 7 werdend ie Durchflüsse auf der Permeatseite der Membrananlage 2 bspw. im Bereich einer Zuführleitung 20, durch die eine Zufuhr von Waschsaft erfolgt, und im Bereich der Wegführung von mit nichtflüchtigen Stoffen angereicherter Flüssigkeit erfasst. Hierfür sind entsprechende Durchflussmessgeräte 21 bzw 22 in der Zuführleitung 20 bzw. in der Leitung 6 angeordnet. Von den Durchflussmessgeräten 21 und 22 führen Messleitungen 23 und 24 zum Qualitäts-Optimalisator 18.

Zur Bestimmung der Durchflussmengen kann bspw. anstelle der Durchflussmessung auch die Pumpeneinstellung herbeigezogen werden, z.B. bei Verwendung einer Dosierpumpe als Zuführpumpe.

Bei mehrstufigen Membrananlagen ist die Anwendung des erfindungsgemässen Verfahrens sowohl einzeln für jede Stufe als auch gesamthaft über alle Stufen in vorteilhafter Weise möglich.

## Patentansprüche

1. Verfahren zur Qualitätsoptimierung beim Entfernen von nichtflüchtigen Stoffen wie Zucker und/oder Säure und/oder Fehlgeschmack verursachenden Stoffen aus nichtalkoholischen oder alkoholischen Getränken oder zuckerhaltigen Lösungen mittels Membrantrennverfahren, dadurch gekennzeichnet, dass der Membrandruck der Membrananlage (2) zur Durchführung des Membrantrennverfahrens in Abhängigkeit von der Diffusion bzw. Rückdiffusion des Transportmittels für den zu entfernenden Stoff steuer- bzw. regelbar ist.

2. Verfahren nach Anspruch 1, dadurch gekennzeichnet, dass wenigstens zwei Durchflussmengen innerhalb des Gesamt-Systems erfasst werden, der Differenzwert der Durchflussmengen mit einem für die Qualität des Produktes optimalen Wert verglichen und die gegebenenfalls erhaltene Abweichung als Führungsgrösse zur Steuerung oder Regelung des Druckes im Retentatkreislauf (8) der Membrananlage (2) verwendet wird.

3. Verfahren nach Anspruch 2, dadurch gekennzeichnet, dass die Durchflussmengen vorzugsweise vor und nach der Membrananlage (2) erfasst werden.

4. Verfahren nach Anspruch 2 oder 3, dadurch gekennzeichnet, dass die Durchflussmengen auf der Permeatseite der Membrananlage (2) im Bereich der Zufuhr eines Waschsaftes und der Wegführung von mit nichtflüchtigen Stoffen angereicherter Flüssigkeit erfasst werden.

5. Verfahren nach einem der Ansprüche 2 bis 4, dadurch gekennzeichnet, dass der Differenzwert der Durchflussmengen bei 0 ± 25 % liegt.

6. Verfahren nach einem der Ansprüche 1 bis 5, dadurch gekennzeichnet, dass in der Zuführleitung (1) zur Membrananlage (2) oder in einer auf der Permeatseite angeordneten Zuführleitung (20) für Waschsaft, und in der Abflussleitung (7) des Retentatkreislaufes (8) oder in der auf der Permeatseite angeordneten Leitung (6) zur Wegführung von mit nichtflüchtigen Stoffen angereicherter Flüssigkeit jeweils ein Durchflussmessgerät (14, 15) bzw. (21, 22) angeordnet ist, die über Messleitungen (16, 17) bzw. (23, 24) mit einem bspw. aus einem Regelgerät bestehenden Qualitäts-Optimalisator (18) zur Steuerung bzw. Regelung des Druckes im Retentatkreislauf (8) verbunden sind.

7. Verfahren nach einem der Ansprüche 1 bis 6, dadurch gekennzeichnet, dass der Membrandruck bzw. der Retentat-Druck durch Veränderung des Systemdruckes angepasst wird.

8. Verfahren nach einem der Ansprüche 1 bis 7, dadurch gekennzeichnet, dass der Retentatkreislauf (8) der Membrananlage (2) über ein Druckgefäss (11) und ein Gaspolster (12) mit einer Druckgasleitung (10) und einem Druckregler (13) verbunden ist.

9. Verfahren nach einem der Ansprüche 1 bis 8, dadurch gekennzeichnet, dass zur automatischen Regelung des Retentat-Druckes der Qualitäts-Optimalisator (18) über eine Steuerleitung (19) mit dem Druckregler (13) verbunden ist.

## Claims

1. Quality optimisation process for extracting non-volatile substances such as sugar and/or acid and/or substances producing an off-taste from alcoholic or non-alcoholic drinks or sugar-containing solutions by means of membrane separation processes, characterised in that the membrane pressure of the membrane separator (2) for carrying out the membrane separation process can be controlled as a function of the diffusion or back diffusion of the carrier for the substance to be extracted.

2. Process according to claim 1, characterised in that at least two flow rates are detected within the entire system, the difference between the flow rates is compared with an optimum value for the quality of the product and any deviation detected is used as a reference variable for controlling the pressure in the retentate circuit (8) of the membrane separator (2).

3. Process according to claim 2, characterised in that the flow rates are preferably detected upstream and downstream of the membrane separator (2).

4. Process according to claim 2 or claim 3, characterised in that the flow rates are detected on the permeate side of the membrane separator (2) in the region of the supply of a washing juice and the removal of liquid enriched with non-volatile substances.

5. Process according to one of claims 2 to 4, characterised in that the difference between the flow rates is 0 ± 25 %.

6. Process according to one of claims 1 to 5, characterised in that a flowmeter (14, 15) or (21, 22) connected via measuring lines (16, 17) or (23, 24) to a quality optimiser (18) consisting, e.g. of a control unit for controlling the pressure in the retentate circuit (8) is arranged in the supply line (1) to the membrane separator (2) or in a supply line (20) for washing juice arranged on the permeate side and in the discharge line (7) of the retentate circuit (8) or in the line (6) for removing liquid enriched with non-volatile substances arranged on the permeate side.

7. Process according to one of claims 1 to 6, characterised in that the membrane pressure or the retentate pressure is adapted by varying the system pressure.

8. Process according to one of claims 1 to 7, characterised in that the retentate circuit (8) of the membrane separator (2) is connected via a pressure vessel (11) and a gas cushion (12) to a compressed-gas line (10) and a pressure regulator (13).

9. Process according to one of claims 1 to 8, characterised in that the quality optimiser (18) is connected via a control line (19) to the pressure regulator (13) for automatic control of the retentate pressure.

## Revendications

1. Procédé d'optimisation de la qualité lors de l'extraction de substances non volatiles, telles que du sucre et/ou des acides et/ou des substances produisant une modification du goût, dans des boissons non alcoolisées ou alcoolisées ou des solutions sucrées au moyen de procédés de séparation à membrane, **caractérisé** en ce que la pression de membrane de l'installation à membrane (2) pour la mise en oeuvre du procédé de séparation à membrane peut être commandée ou encore régulée en fonction de la diffusion ou encore de la diffusion en retour de l'agent de transport pour la substance à extraire.

2. Procédé selon la revendication 1, **caractérisé** en ce qu'on enregistre au moins deux débits de passage à l'intérieur de l'ensemble du système, on compare la valeur différentielle des débits de passage à une valeur optimale pour la qualité du produit, et on utilise l'écart éventuellement obtenu comme grandeur de guidage pour la commande ou la régulation de la pression dans le circuit de rétentat (8) de l'installation à membrane (2).

3. Procédé selon la revendication 2, **caractérisé** en ce qu'on enregistre de préférence les débits de passage avant et après l'installation à membrane (2).

4. Procédé selon la revendication 2 ou 3, **caractérisé** en ce qu'on enregistre les débits de passage sur le côté perméat de l'installation à membrane (2), dans la région de l'apport d'un jus de lavage et de l'évacuation de liquide enrichi de substances non volatiles.

5. Procédé selon l'une des revendications 2 à 4, **caractérisé** en ce que la valeur différentielle des débits de passage est égale à 0 ± 25 %.

6. Procédé selon l'une des revendications 1 à 5, **caractérisé** en ce qu'un appareil respectif de mesure de débit (14, 15) ou (21, 22) est disposé dans la conduite d'entrée (1) de l'installation à membrane (2) ou dans une conduite (20) d'apport de jus de lavage qui est disposée du côté perméat, ainsi que dans la conduite de sortie (7) du circuit de rétentat (8) ou dans la conduite (6) qui est disposée du côté perméat pour l'évacuation de liquide enrichi de substances non volatiles, ces appareils étant reliés par l'intermédiaire de conduites de mesure respectives (16, 17) ou (23, 24) à un optimiseur de qualité (18), consistant par exemple en un appareil de régulation, pour la commande ou la régulation de la pression dans le circuit de rétentat (8).

7. Procédé selon l'une des revendications 1 à 6, **caractérisé** en ce que la pression de membrane ou encore la pression du rétentat est adaptée en modifiant la pression du système.

8. Procédé selon l'une des revendications 1 à 7, **caractérisé** en ce que le circuit de rétentat (8) de l'installation à membrane (2) est relié par l'intermédiaire d'un récipient de pression (11) et d'un coussin de gaz (12) à une conduite de gaz comprimé (10) et un régulateur de pression (13).

9. Procédé selon l'une des revendications 1 à 8, **caractérisé** en ce qu'en vue de la régulation automatique de la pression du rétentat, l'optimiseur de qualité (18) est relié au régulateur de pression (13) par l'intermédiaire d'une conduite de commande (19).

Fig. 1

Fig. 2